# EUROPÄISCHE PATENTSCHRIFT

(11) **EP 1 085 120 B1**
(45) Veröffentlichungstag und Bekanntmachung des Hinweises auf die Patenterteilung: **25.02.2004**
(21) Anmeldenummer: 00117486.1
(22) Anmeldetag: 12.08.2000
(51) Int. Cl.: D21F 1/00

(54) **Band für den Umlauf in Maschinen**
Band for use in machines
Bande pour l' utilisation dans des machines

(30) Priorität: 18.09.1999 DE 19944864
(43) Veröffentlichungstag der Anmeldung: 21.03.2001
(73) Patentinhaber: Thomas Josef Heimbach Gesellschaft mit beschränkter Haftung & Co., D-52353 Düren (DE)
(72) Erfinder: Zils, Frank, 52399 Merzenich-Golzheim (DE)
(74) Vertreter: Paul, Dieter-Alfred, Dipl.-Ing.

(56) Entgegenhaltungen:
- WO-A-96/34146
- DE-A- 3 735 709
- GB-A- 982 682
- GB-A- 2 060 016
- US-A- 3 309 790
- US-A- 3 324 516

## Beschreibung

Die Erfindung betrifft ein Band für den Umlauf in Maschinen, z.B. in Papiermaschinen, gemäß den Oberbegriffen der Ansprüche 1 und 2.

Insbesondere in Maschinen, in denen Bahnen oder Folien transportiert werden, wie beispielsweise Papiermaschinen, kommen lange und breite Bänder zum Einsatz, die in der Maschine umlaufen und dabei die Bahnen bzw. Folien unterstützen. In Papiermaschinen sind dies in der Mehrzahl textile Filze oder Siebe, die als Basis ein Gewebe oder Gewirke haben. Auf diese Basis werden dann zur Herstellung von Filzen eine oder mehrere Faserschichten aufgenadelt. Solche Filze werden insbesondere in der Pressenpartie einer Papiermaschine eingesetzt, während Siebe im Blattbildungsbereich und in der Trockenpartie verwendet werden.

In vielen Fällen werden die Bänder nicht endlos, sondern in einer bestimmten Länge hergestellt. Die stirnseitigen Enden werden dann vor dem Einzug in die Maschine oder auch erst in der Maschine selbst über eine Naht miteinander verbunden. Dabei hat sich im Laufe der Zeit die sogenannte Steckdrahtnaht durchgesetzt. Bei dieser Naht werden an den einander zugewandten Stirnseiten des Bandes eine Vielzahl von beabstandeten Kupplungsösen vorgesehen, die zum Schließen derart in Überlappung gebracht werden, daß ein sich in Bandquerrichtung erstreckender Durchgangskanal gebildet wird, der von den Kupplungsösen beider Stirnseiten abwechselnd eingefaßt wird. In diesen Durchgangskanal wird dann ein Kupplungsdraht eingeschoben, der die beiden Stirnseiten des Bandes nach Art eines Scharniers verbindet. Dabei können auch mehrere Kupplungsdrähte parallel zueinander vorgesehen sein.

Für die Ausbildung der Kupplungsösen sind verschiedene Systeme bekannt. In der US-A-4,344,209 und der DE-A-2 256 244 (Figuren 9 und 10) werden die Kupplungsösen durch U-förmige Klammern gebildet, die sich in die Enden des Bandes einkrallen. Die mit Hilfe solcher Kupplungsösen hergestellten Nähte werden als Klippernähte bezeichnet. Daneben ist es durch die US-A-3,972,105 bekannt, die Kupplungsösen jeweils durch ein U-förmiges Blechteil zu bilden, wobei die Schenkel jedes Blechteils mit der zugehörigen Stirnseite des Bandes verbunden sind. In die Blechteile sind eine Vielzahl von Ausschnitten eingeformt, so daß Kupplungsvorsprünge mit den Kupplungsösen entstehen, wobei die Kupplungsvorsprünge und die Ausschnitte zueinander komplementär sind.

Die vorbeschriebenen Nahtformen sind größtenteils durch Steckdrahtnähte ersetzt worden, bei denen die Kupplungsösen durch jeweils eine über die Stirnseiten gehende Kupplungswendel gebildet werden (vgl. DE-A-2 256 244; US-A-4,574,435; EP-B-0 185 907; EP-A-0 564 436). Die Verbindung der Wendeln mit den Stirnseiten des Bandes geschieht entweder mittels besonderer Nahtfäden oder durch die Längsfäden des Bandes selbst, indem diese die Windungen der wendel umschlingen. Dabei kann an den Umschlingungspunkten zusätzlich ein Steckdraht in die Wendel eingesetzt sein. Die Wendeln können zum Kuppeln der Enden des Bandes in Überlappung gebracht werden, so daß ein grader Durchgangskanal gebildet wird, durch den dann der Kupplungsdraht gesteckt werden kann.

Ferner sind Förderbänder bekannt, bei denen an die Stirnseiten des Förderbandes Metallschienen angeschweißt, verklebt oder vernietet sind. Die Metallschienen sind so geformt, daß sich kammartig ineinander greifende Ösen und Ausnehmungen ergeben. Durch die miteinander fluchtenden Ösen ist ein Kupplungsdraht gesteckt, der die beiden Stirnseiten des Förderbandes scharnierartig miteinander verbindet (vgl. DE-GM 68 03 127).

Des weiteren sind Treibriemen bekannt, deren stirnseitige Enden über mehrere Gelenkplatten miteinander verbunden sind, die durch Scharnierbolzen gekuppelt sind. Die Scharnierbolzen sind punktweise an dem Treibriemen befestigt (vgl. DE-PS 236 136).

In der WO 96/34146 ist ein Papiermaschinenband offenbart, an dessen Stirnseiten zwei sich in Bandquerrichtung erstreckende Kupplungselemente vorgesehen sind, die mit dem übrigen Teil des Bandes über die Kupplungselemente umschließende Fäden verbunden sind. Die Kupplungselemente sind als spritzgegossene oder extrudierte Kunststofformkörper ausgebildet, die einen sich in Bandquerrichtung erstreckenden, durchgehenden Steg aufweisen, der von den Fäden des Gewebes umschlossen ist. An den Steg angeformt sind eine vielzahl von nebeneinander im Abstand angeordnete, geschlossene Ösen, die beim Schließen des Bandes kammartig in Überlappung gebracht und durch einen Kupplungsdraht scharnierartig miteinander verbunden werden können. Die Herstellung der Kunststofformteile ist aufwendig, da spezielle Formen angefertigt werden müssen.

Daneben sind sogenannte Drahtgliederbänder insbesondere für den Einsatz in der Trockenpartie einer Papiermaschine bekannt, bei denen das gesamte Band von sich in Querrichtung erstreckenden wendeln gebildet wird, die sich jeweils derart überlappen, daß Durchgangskanäle entstehen, in die Kupplungsdrähte eingeschoben sind (vgl. z.B. EP-A-0 171 891). Alternativ zu den Wendeln ist vorgeschlagen worden, eine Vielzahl von in Bandquerrichtung aneinandergereihten Laschen (vgl. US-A-4,469,221) oder ovalen Ringen (vgl. EP-A-0 763 623, WO 99/16966) vorzusehen, die die Kupplungsdrähte miteinander verbinden. Schließlich ist in der DE-A-37 35 709 vorgeschlagen, die Kupplungselemente als sich in Bandquerrichtung erstreckende, längliche Formkörper aus Kunststoff auszubilden, die Kupplungsösen aufweisen, welche die Kupplungsdrähte umschließen.

Die bekannten Steckdrahtnähte sind - wie die Klippernähte - nur begrenzt einsetzbar, oder es macht - wie bei den Kupplungswendeln - Probleme, sie teilungsgerecht in Überlappung zu bringen, insbesondere wenn das Band mehr als 10 m breit ist. Außerdem ist die Festigkeit solcher Steckdrahtnähte bei hohen Anforderungen nicht immer ausreichend.

Der Erfindung liegt deshalb die Aufgabe zugrunde, die Kupplungselemente bei einem Band der eingangs genannten Art so auszubilden, daß eine hochfeste Steckdrahtnaht auf einfache Weise und kostengünstig hergestellt werden kann.

Diese Aufgabe wird in einer ersten Alternative erfindungsgemäß dadurch gelöst, daß die Kupplungselemente als Kupplungsschläuche ausgebildet sind, die zur Bildung der Kupplungsösen über einen Teilquerschnitt gehende Ausschnitte aufweisen, die komplementär zu den Kupplungsösen des jeweils benachbarten Kupplungsschlauches ausgebildet sind, daß das bzw. die Paar(e) von Kupplungsschläuchen an den einander zugewandten Längsseiten Ausschnitte und Kupplungsösen aufweisen, daß in die Kupplungsschläuche verstärkungsdrähte eingelegt sind und daß die Kupplungsschläuche und die Verstärkungsdrähte von den Fäden im Bereich der Ausschnitte umschlossen sind.

In einer zweiten Alternative ist vorgesehen, daß das bzw. die Paar(e) von Kupplungsschläuchen an beiden Längsseiten Ausschnitte und Kupplungsösen aufweisen und daß in den Kupplungsösen auf den einander abgewandten Längsseiten der Kupplungsschläuche Kupplungsdrähte eingesteckt sind, die von den Fäden umschlossen sind.

In beiden Fällen werden die Kupplungselemente also aus schlauchartigen Gebilden hergestellt, in die lückenbildende Ausschnitte auf zumindest einer Längsseite eingeformt werden, wodurch die Kupplungsösen entstehen. Aufgrund der komplementären Ausbildung der Ausschnitte und Kupplungsösen können letztere wie bei den bekannten Steckdrahtnähten zur Bildung eines Durchgangskanals in Überlappung gebracht werden, so daß ein Kupplungsdraht durch die Kupplungsösen gesteckt werden kann, der die Kupplungselemente und damit die Stirnseiten des Bandes miteinander verbindet. Dabei lassen sich die Ausschnitte den jeweiligen Anforderungen beliebig in dem Sinne anpassen, daß die Kupplungsösen auch bei großen Bandbreiten problemlos teilungsgerecht zur Überlappung gebracht werden können und damit das Durchschieben des Kupplungsdrahtes einfach und schnell vonstatten gehen kann.

Die Schlauchform sowie die in den Kupplungsschläuchen eingesetzten Verstärkungsdrähte bzw. Kupplungsdrähte geben den Kupplungselementen eine hohe Festigkeit. Dabei können die mechanischen und chemischen Eigenschaften durch entsprechende Materialwahl an die jeweiligen Betriebsbedingungen angepaßt werden, d.h. es können Materialien verwendet werden, die hohe Abriebfestigkeit, Elastizität, Dimensionsstabilität etc. gewährleisten. Entsprechendes gilt für die chemischen Eigenschaften.

Im übrigen können die Ausschnitte so vorgesehen sein, daß die Wasserdurchlässigkeit im Nahtbereich sich kaum vom übrigen Bereich des Bandes unterscheidet, d.h. auch insoweit ist eine große Freiheit in der Gestaltung der Kupplungselemente gegeben. Die Flexibilität der Kupplungselemente sorgt im übrigen dafür, daß sich der Nahtbereich gut an die zu transportierende Bahn und an die Preß- und Umlenkzylinder anpassen.

Die Kupplungsschläuche haben vorzugsweise ovalen Querschnitt, können aber auch einen rechteckigen Querschnitt aufweisen, bei denen ebene Ober- und Unterseiten gebildet werden, die bündig zum übrigen Teil des Bandes liegen.

Als Material für die Kupplungsschläuche ist ein an den jeweiligen verwendungszweck angepaßtes Kunststoffmaterial vorgesehen, wobei hierfür vor allem Epoxide (EP), Acrylate (A), Polyurethane (PUR), Polyvinylalkohole (PVAL) als herauslösbare Komponenten und Polyethylenterephthalat (PET), Polyphenylensulfid (PPS), Polyetheretherketon (PEEK) verwendet werden können, wobei die Materialien auch mit einer Glasfaserverstärkung versehen sein können. Zur Verbesserung der Festigkeit, insbesondere für hohe Beanspruchungen, sollten die Kunststoffschläuche eine innenliegende Armierung. aufweisen, beispielsweise in Form eines Schlauchgewebes, -gewirkes, -geleges, -geflechtes oder Netzes etc., wobei insbesondere Polyethylenterephthalat (PET), Polyamid (PA) wie PA 6, PA 6.6, PA 11 oder PA 12, Polphenylensulfid (PPS), Polyetheretherketon (PEEK) oder Aramid (AR) in Frage kommen. Die Armierung kann dann beschichtet werden, beispielsweise im Wege einer Extrudierung nach Art von Druckschläuchen oder Ölschläuchen.

Die Dicke der Kupplungsschläuche kann 1 bis 4 mm und die Erstreckung in Bandlängsrichtung 3 bis 25 mm betragen. Selbstverständlich sind auch andere Formate denkbar.

Die Herstellung eines Bandes der vorbeschriebenen Art kann dadurch geschehen, daß die Ausschnitte in den Kupplungsschläuchen ausgestanzt, ausgeschnitten oder ausgefräst werden, wobei das Ausschneiden auch mit Hilfe von Lasern geschehen kann. Vorzugsweise sollte ein schlauchförmige Armierung mit einer Kunststoffbeschichtung versehen werden, beispielsweise mit Hilfe des Extrusionsverfahrens.

Ein weiterer Herstellungsschritt besteht darin, daß die Kunststoffschläuche mit ihren Längsseiten nacheinander aneinandergelegt und dabei jeweils zwei Kunststoffschläuche durch Einschieben von Kupplungsdrähten in die jeweiligen Durchgangskanäle miteinander verbunden werden, ähnlich wie bei den aus Drahtwendeln und Kupplungsdrähten bestehenden Drahtgliederbändern.

In der Zeichnung ist die Erfindung anhand von Ausführungsbeispielen näher veranschaulicht. Es zeigen:
- Figur 1: ein Papiermaschinenband mit einem Kupplungsschlauch an einer Stirnseite in der Draufsicht;
- Figur 2: einen Querschnitt durch das Papiermaschinenband gemäß Figur 1 in der Ebene A-A;
- Figur 3: einen Querschnitt durch ein Papiermaschinenband gemäß Figur 1 in der Ebene B-B;
- Figur 4: zwei miteinander gekuppelte Kupplungselemente des Paiermaschinenbandes gemäß den Figuren 1 bis 3;
- Figur 5: einen Querschnitt durch die Kupplungselemente gemäß Figur 4 in der Ebene C-C;
- Figur 6: eine Draufsicht auf den Nahtbereich eines weiteren Papiermaschinenbandes;
- Figur 7: einen Querschnitt durch den Nahtbereich des Papiermaschinenbandes gemäß Figur 6 in der Ebene A-A.

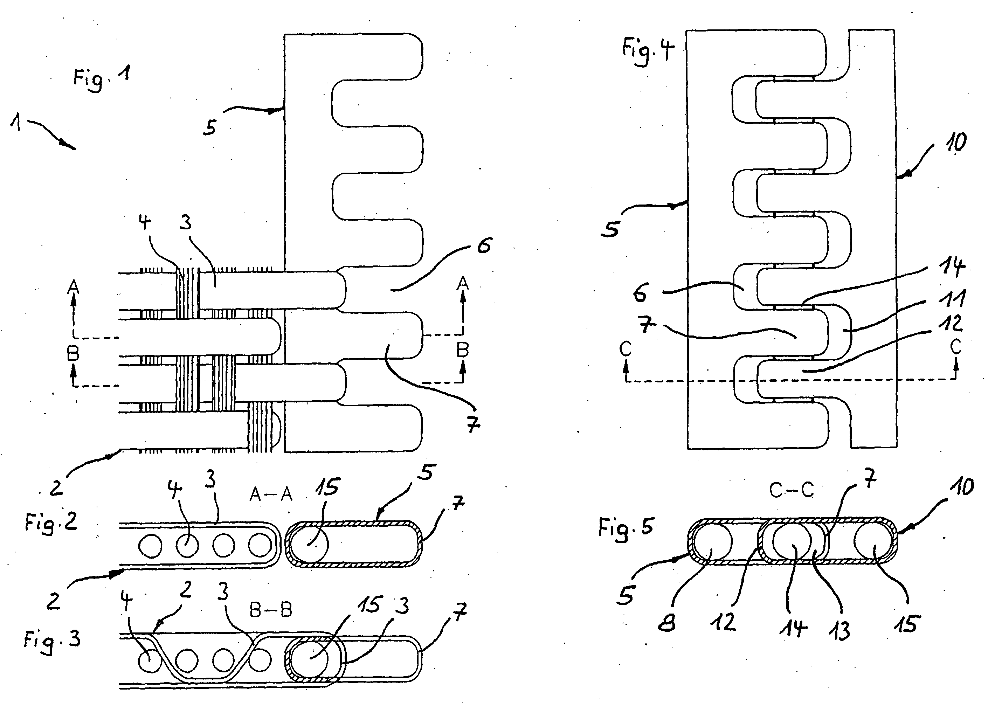

In Figur 1 ist teilweise der Stirnseitenbereich eines Papiermaschinenbandes 1 dargestellt. Das Papiermaschinenband 1 besteht im wesentlichen, d.h. bis auf die Nahtausbildung, aus einem Gewebe 2 mit Längsfäden - beispielhaft mit 3 bezeichnet - und Querfäden - beispielhaft mit 4 bezeichnet -, die miteinander verwebt sind. Die dargestellte Gewebestruktur setzt sich sowohl in Längsrichtung (schnittebenen A-A und B-B) als auch in Querrichtung fort.

Mit der Stirnseite des Gewebes 2 ist ein Kupplungsschlauch 5 verbunden. Dieser Kupplungsschlauch 5 weist U-förmige Ausschnitte auf - beispielhaft mit 6 bezeichnet -, welche aus dem Kupplungsschlauch 5 ausgestanzt oder ausgeschnitten sind. Die Abstände der Ausschnitte 6 sind so bemessen, daß jeder zweite Längsfaden 3 jeweils in einen Ausschnitt 6 einfaßt und damit den Kupplungsschlauch 5 umschlingt. Die Längsfäden 3 sind dann wieder zurückgewebt, so daß eine feste Verbindung zwischen Kupplungsschlauch 5 und Gewebe 2 hergestellt wird. Dies ist insbesondere Figur 3 zu entnehmen. Dabei ist zu sehen, daß dem der Stirnseite des Gewebes 2 benachbarten Bereich des Kupplungsschlauchs 5 zusätzlich ein Verstärkungsdraht 8 beispielsweise aus einem Kunststoffmaterial eingelegt ist, der ebenfalls von den die Ausschnitte 6 durchfassenden Längsfäden umschlossen wird und dem Kupplungsschlauch 5 in diesem Bereich Stabilität gibt.

Durch das Einformen der Ausschnitte 6 entstehen zwischen diesen Kupplungsösen - beispielhaft mit 7 bezeichnet -, wie insbesondere aus Figur 2 zu ersehen ist. Mit Hilfe dieser Kupplungsösen 7 läßt sich eine Verbindung mit einem komplementären Kupplungsschlauch 10 herstellen, wie aus Figur 4 ersichtlich ist. Hier sind die beiden Kupplungsschläuche 5, 10 in sich überlappender Stellung dargestellt, allerdings ohne die sich jeweils an den einander abgewandten Seiten anschließenden Stirnseitenbereiche des Gewebes 2. Die Verbindung des rechtsseitigen Kupplungsschlauchs 10 mit dem Gewebe 2 ist in der gleichen weise vorgenommen worden wie die aus Figur 1 ersichtliche verbindung des linksseitigen Kupplungsschlauchs 5.

Der Kupplungsschlauch 10 weist ebenfalls Ausschnitte - beispielhaft mit 11 bezeichnet - und Kupplungsösen - beispielhaft mit 12 bezeichnet - auf. Die Kupplungsösen 7, 12 beider Kupplungsschläuche 5, 10 sind durch Einfassen in die Ausschnitte 6, 11 des jeweils gegenüberliegenden Kupplungsschlauches 5, 10 derart in Überlappung gebracht, daß - wie insbesondere aus Figur 5 ersichtlich - ein grader Durchgangskanal 13 entsteht, der von den Kupplungsösen 7, 12 beider Kupplungsschläuche 5, 10 wechselweise eingefaßt wird. Den Durchgangskanal 13 durchsetzt ein Kupplungsdraht 14 aus einem geeigneten Kunststoff. Er stellt die Verbindung zwischen den beiden Kupplungsschläuchen 5, 10 und damit den Stirnseiten des Gewebes 2 her. Wie bei dem linksseitigen Kupplungsschlauch 5 ist auch bei dem rechtsseitigen Kupplungsschlauch 10 ein Verstärkungsdraht 15 in den den Stirnseiten des Papiermaschinenbandes 1 zugewandten Bereich eingelegt.

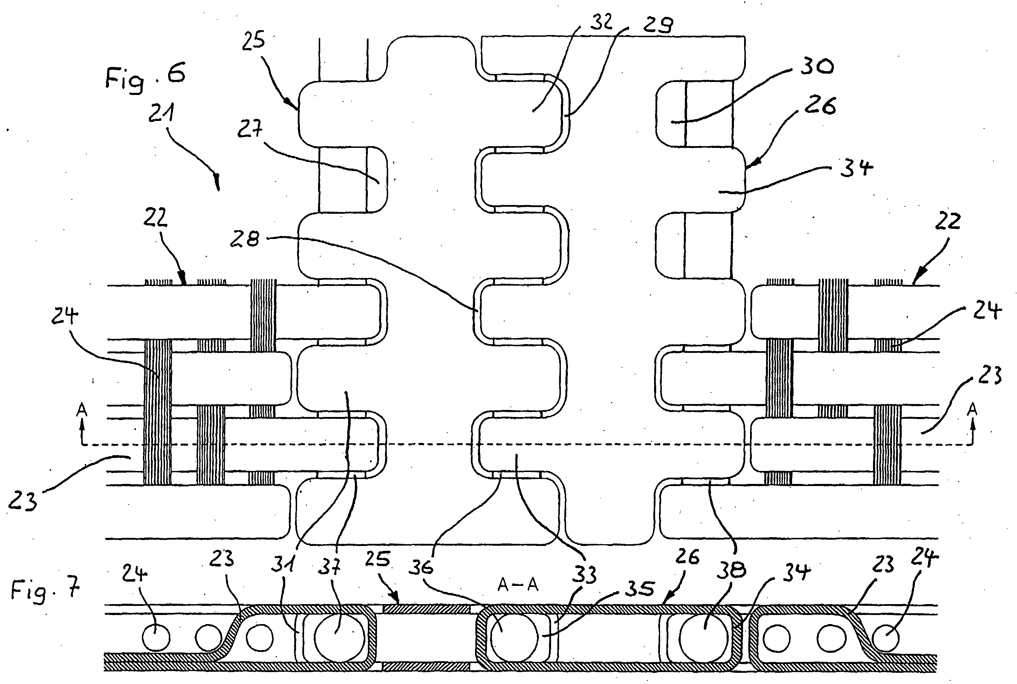

In den Figuren 6 und 7 ist ausschnittsweise ein zweites Papiermaschinenband 21 dargestellt. Es weist ebenfalls ein Gewebe 22 mit Längsfäden - beispielhaft mit 23 bezeichnet - und Querfäden - beispielhaft mit 24 bezeichnet - auf, die miteinander verwebt sind. Die Stirnseiten des Gewebes 22 sind jeweils mit einem Kupplungsschlauch 25, 26 verbunden. Im Unterschied zu den Kupplungsschläuchen 5, 10 bei dem Ausführungsbeispiel gemäß den Figuren 1 bis 5 weisen hier die Kupplungsschläuche 25, 26 jeweils auf beiden Längsseiten Ausschnitte - beispielhaft mit 27 bzw. 28 bzw. 29 bzw. 30 bezeichnet - auf, die aus den Kupplungsschläuchen 25, 26 ausgeschnitten bzw. ausgestanzt sind. Hierdurch sind jeweils Reihen von Kupplungsösen - beispielhaft mit 31 bzw. 32 bzw. 33 bzw. 34 bezeichnet - entstanden. An den einander zugewandten Längsseiten der Kupplungsschläuche 25, 26 fassen jeweils wechselweise die Kupplungsösen 32, 33 des einen Kupplungsschlauches 25, 26 in die jeweils gegenüberliegenden Ausschnitte 28, 29 des anderen Kupplungsschlauches 25, 26 ein. Auf diese Weise ergibt sich ein grader Durchgangskanal 35, der in dem gezeigten gekuppelten Zustand von einem Kupplungsdraht 36 durchsetzt wird und auf diese Weise eine scharnierartige Verbindung zwischen den Stirnseiten des Gewebes 22 herstellt.

Auf den einander abgewandten Längsseiten der Kupplungsschläuche 25, 26 werden die Kupplungsösen 31, 34 ebenfalls von je einem Kupplungsdraht 37, 38 durchsetzt. Die beiden Kupplungsdrähte 37, 38 werden in den Ausschnitten 27, 30 von jedem zweiten Längsfaden 23 des Gewebes 22 umschlungen, wobei diese Längsfäden 23 dann anschließend wieder in das Gewebe 22 zurückgewebt werden, wie insbesondere Figur 7 zu entnehmen ist. Durch diese Umschlingung wird eine feste Verbindung zwischen Gewebe 22 und dem jeweiligen Kupplungsschlauch 25, 26 hergestellt.

## Patentansprüche

1. Band (1) für den Umlauf in Maschinen, z.B. in Papiermaschinen, mit wenigstens einem Paar von benachbarten länglichen, sich in Bandquerrichtung erstreckenden Kupplungselementen (5, 10), die mit dem übrigen Teil des Bandes über die Kupplungselemente (5, 10) umschließende Fäden (3) verbunden sind und welche an den einander zugewandten Seiten Kupplungsösen (7, 12) aufweisen, wobei die Kupplungsösen (7, 12) zweier Kupplungselemente (5, 10) derart kammartig ineinandergreifen, daß sich ein in Bandquerrichtung erstrekkender Durchgangskanal (13) ergibt, durch den ein Kupplungsdraht (14) gesteckt ist, **dadurch gekennzeichnet, daß** die Kupplungselemente als Kupplungsschläuche (5, 10) ausgebildet sind, die zur Bildung der Kupplungsösen (7, 12) über einen Teilquerschnitt gehende Ausschnitte (6) aufweisen, die komplementär zu den Kupplungsösen (7, 12) des jeweils benachbarten Kupplungsschlauches (5, 10) ausgebildet sind, daß das bzw. die Paar(e) von Kupplungsschläuchen (5, 10) an den einander zugewandten Längsseiten Ausschnitte (6, 11) und Kupplungsösen (7, 12) aufweisen, daß in die Kupplungsschläuche (5, 10) Verstärkungsdrähte (8, 15) eingelegt sind und daß die Kupplungsschläuche (5, 10) und die verstärkungsdrähte (8, 15) von den Fäden (3) im Bereich der Ausschnitte (6, 11) umschlossen sind.

2. Band (21) für den Umlauf in Maschinen, z.B. in Papiermaschinen, mit wenigstens einem Paar von benachbarten, länglichen, sich in Bandrichtung erstreckenden Kupplungselementen (25, 26), die mit dem übrigen Teil des Bandes (21) über die Kupplungselemente (25, 26) umschließende Fäden (23) verbunden sind und welche an den einander zugewandten Seiten Kupplungsösen (31 bis 34) aufweisen, wobei die Kupplungsösen (31 bis 34) zweier Kupplungselemente (25, 26) derart kammartig ineinandergreifen, daß sich ein in Bandrichtung erstreckender Durchgangskanal (35) ergibt, durch den ein Kupplungsdraht (36) gesteckt ist, **dadurch gekennzeichnet, daß** die Kupplungselemente als Kupplungsschläuche (25, 26) ausgebildet sind, die zur Bildung der Kupplungsösen (31 bis 34) über einen Teilquerschnitt gehende Ausschnitte (27 bis 30) aufweisen, die komplementär zu den Kupplungsösen (31 bis 34) des jeweils benachbarten Kupplungsschlauchs (25, 26) ausgebildet sind, daß das bzw. die Paar(e) von Kupplungsschläuchen (25, 26) an beiden Längsseiten Ausschnitte (27 bis 30) und Kupplungsösen (31 bis 34) aufweisen und daß in den Kupplungsösen (31, 34) auf den einander abgewandten Längsseiten der Kupplungsschläuche (25, 26) Kupplungsdrähte (37, 38) eingesteckt sind, die von den Fäden (23) umschlossen sind.

3. Band nach Anspruch 1 oder 2 , **dadurch gekennzeichnet, daß** die Fäden (3, 23) Teil eines Gewebes (2, 22) oder Gewirkes sind.

4. Band nach einem der Ansprüche 1 bis 3, **dadurch gekennzeichnet, daß** die Kupplungsschläuche (5, 10, 25, 26) ebene Ober- und Unterseiten aufweisen, die bündig zum übrigen Teil des Bandes (1, 21) liegen.

5. Band nach einem der Ansprüche 1 bis 4, **dadurch gekennzeichnet, daß** die Kupplungsschläuche (5, 10, 25, 26) aus einem Kunststoffmaterial hergestellt sind.

6. Band nach einem der Ansprüche 1 bis 5, **dadurch gekennzeichnet, daß** die Kupplungsschläuche (5, 10, 25, 26) eine innenliegende Armierung aufweisen.

7. Band nach einem der Ansprüche 1 bis 6, **dadurch gekennzeichnet, daß** die Höhe der Kupplungsschläuche (5, 10, 25, 26) 1 bis 4 mm und die Erstreckung in Bandlängsrichtung 3 bis 25 mm beträgt.

## Claims

1. Band (1) for use in machines, for example paper machines, with at least one pair of adjacent oblong coupling elements (5, 10) extending in the transverse direction of the band, which are connected to the remainder of the band through threads (3) surrounding the coupling elements (5, 10) and which have coupling eyes (7, 12) on the sides turned towards each other, in which the coupling eyes (7, 12) of two coupling elements (5, 10) interlock like combs in such a way that there is a transit channel (13) extending in the transverse direction of the band, through which a coupling wire (14) is put, **characterised by** the fact that the coupling elements are designed as coupling hoses (5, 10), which have cutouts (6) over a part of the cross section to form the coupling eyes (7, 12), which are made complementary to the coupling eyes (7, 12) of the relevant adjacent coupling hoses (5, 10), that the pair(s) of coupling hoses (5, 10) have cutouts, (6, 11) and coupling eyes (7, 12) on the long sides turned towards each other, that reinforcing wires (8, 15) are inserted into the coupling hoses (5, 10) and that the coupling hoses (5, 10) and reinforcing wires (8, 15) are surrounded by threads (3) in the area of the cutouts (6, 11).

2. Band (21) for use in machines, for example paper machines, with at least one pair of adjacent oblong coupling elements (25, 26) extending in the direction of the band, which are connected to the rest of the band (21) through threads (23) surrounding the coupling elements (25, 26) and which have coupling eyes (31 to 34) on the sides turned towards each other, in which the coupling eyes (31 to 34) of two coupling elements (25, 26) interlock like combs in such a way that there is a transit channel (35) extending in the direction of the band, through which a coupling wire (36) is put, **characterised by the fact that** the coupling elements are made as coupling hoses (25, 26), which have cutouts (27 to 30) over a part of the cross section to form the coupling eyes (31 to 34), which are designed complementary to the coupling eyes (31 to 34) of the relevant adjacent coupling hoses (25, 26), that the pair(s) of coupling hoses (25, 26) have cutouts (27 to 30) and coupling eyes (31 to 34) on both long sides and that coupling wires (37, 38) are inserted into the coupling eyes (31, 34) on the long sides turned away from each other, which are surrounded by threads (23).

3. Band according to claim 1, **characterised by the fact that** the threads (3, 23) are part of a woven fabric (2, 22) or knitted fabric.

4. Band according to one of claims 1 to 3, **characterised by the fact that** the coupling hoses (5, 10, 25, 26) have even top and bottom sides, which lie flush with the rest of the band (1, 21).

5. Band according to one of claims 1 to 4, **characterised by the fact that** the coupling hoses (5, 10, 25, 26) are made of a plastic material.

6. Band according to one of claims 1 to 5, **characterised by the fact that** the coupling hoses (5, 10, 25, 26) have reinforcement on the inside.

7. Band according to one of claims 1 to 6, **characterised by the fact that** the coupling hoses (5, 10, 25, 26) are 1 to 4 mm high and extend in the longitudinal direction of the band for 3 to 25 mm.

## Revendications

1. Bande (1) pour l'utilisation dans des machines, par exemple dans des machines à papier, comportant au moins une paire d'éléments d'accouplement (5, 10) longitudinaux adjacents, s'étendant dans une direction transversale à la bande, qui sont reliés avec la partie restante de la bande par des fils (3) entourant les éléments d'accouplement (5, 10) et qui présentent, au niveau des côtés orientés les uns vers les autres des oeillets d'accouplement (7, 12), les oeillets d'accouplement (7, 12) de deux éléments d'accouplement (5, 10) s'insérant les uns dans les autres en peigne de façon telle que l'on obtient un canal de passage (13) s'étendant dans une direction transversale à la bande, par lequel est inséré un câble d'accouplement (14), **caractérisée en ce que** les éléments d'accouplement sont conçus en tant que tubes d'accouplement (5, 10) qui présentent, pour former les oeillets d'accouplement (7, 12), des encoches (6) s'étendant sur une section partielle, lesquelles sont formées de façon complémentaire aux oeillets d'accouplement (7, 12) de chaque tube d'accouplement adjacent (5, 10), **en ce que** la ou les paires de tubes d'accouplement (5, 10) présentent) sur les grands côtés orientés les uns vers les autres des encoches (6, 11) et des oeillets d'accouplement (7, 12), **en ce que** sont incorporés dans les tubes d'accouplement (5, 10) des câbles de renforcement (8, 15) et **en ce que** les tubes d'accouplement (5, 10) et les câbles de renforcement (8, 15) sont entourés par les fils (3) dans la zone des encoches (6, 11).

2. Bande (21) pour l'utilisation dans des machines, par exemple dans des machines à papier, comportant au moins une paire d'éléments d'accouplement (25, 26) longitudinaux adjacents, s'étendant dans la direction de la bande, qui sont reliés avec la partie restante de la bande (21) par des fils (23) entourant les éléments d'accouplement (25, 26) et qui présentent, au niveau des côtés orientés les uns vers les autres des oeillets d'accouplement (31 à 34), les oeillets d'accouplement (31 à 34) de deux éléments d'accouplement (25, 26) s'insérant les uns dans les autres en peigne de façon telle que l'on obtient un canal de passage (35) s'étendant dans la direction de la bande, dans lequel est inséré un câble d'accouplement (36), **caractérisée en ce que** les éléments d'accouplement sont conçus en tant que tubes d'accouplement (25, 26) qui présentent, pour former les oeillets d'accouplement (31 à 34), des encoches (27 à 30) s'étendant sur une section partielle, lesquelles sont formées de façon complémentaire aux oeillets d'accouplement (31 à 34) de chaque tube d'accouplement adjacent (25, 26), **en ce que** la ou les paires de tubes d'accouplement (25, 26) présentent) sur les deux grands côtés des encoches (27 à 30) et des oeillets d'accouplement (31 à 34), et **en ce que** sont incorporés dans les oeillets d'accouplement (31, 34), sur les grands côtés éloignés les uns des autres des tubes d'accouplement (25, 26), des câbles de renforcement (37, 38), qui sont entourés par les fils (23).

3. Bande selon la revendication 1 ou 2, **caractérisée en ce que** les fils (3, 23) sont une partie d'un tissu (2, 22) ou d'un tricot.

4. Bande selon l'une des revendications 1 à 3, **caractérisée en ce que** les tubes d'accouplement (5, 10, 25, 26) présentent des côtés supérieurs et inférieurs plans qui affleurent avec la partie restante de la bande (1,21).

5. Bande selon l'une des revendications 1 à 4, **caractérisée en ce que** les tubes d'accouplement (5, 10, 25, 26) sont fabriqués à partir d'un matériau synthétique.

6. Bande selon l'une des revendications 1 à 5, **caractérisée en ce que** les tubes d'accouplement (5, 10, 25, 26) présentent une armature interne.

7. Bande selon l'une des revendications 1 à 6, **caractérisée en ce que** la hauteur des tubes d'accouplement (5, 10, 25, 26) est comprise entre 1 et 4 mm, et l'étendue dans la direction longitudinale de la bande est comprise entre 3 et 25 mm.
